# EUROPEAN PATENT SPECIFICATION

(11) **EP 3 320 780 B1**
(45) Date of publication and mention of the grant of the patent: **16.10.2019**
(21) Application number: 16198699.7
(22) Date of filing: 14.11.2016
(51) Int. Cl.: A22C 15/00

(54) **HAM HOOKING DEVICE**
SCHINKENEINHAKVORRICHTUNG
DISPOSITIF D'ACCROCHAGE DE JAMBON

(43) Date of publication of application: 16.05.2018
(60) Divisional application: 18214924.5
(73) Proprietor: VE.MA.C. Societa' A Responsabilita' Limitata, 41051 Castelnuovo Rangone (MO) (IT)
(72) Inventor: COSTANTINI, Maurizio, 41057 Spilamberto (MO) (IT); VEZZALI, Franco, 41057 Spilamberto (MO) (IT); MALAGOLI, Uliano, 41041 Formigine (MO) (IT)
(74) Representative: Savini, Stefania

(56) References cited:
- EP-A1- 2 305 044
- EP-A1- 2 870 880
- GB-A- 406 793
- GB-A- 190 924 679
- US-A- 71 628
- US-A- 3 837 699
- US-A1- 2015 173 376
- US-A1- 2016 029 650

## Description

The invention relates to a hooking device for hooking a ham, in particular for hooking the ham to a seasoning frame, the hooking device being arranged for supporting a ham during ham seasoning, storage and transport operations.

The invention further relates to a loading and removing device for loading and removing hams, in particular a device arranged for loading hams from conveying means to a seasoning frame and possibly removing the hams from the seasoning frame. In particular, the loading and removing device for loading and removing hams removes the hams from the conveying means, loads the hams onto the seasoning frame and, vice versa, removes the hams from the seasoning frame and possibly deposits the hams on conveying means. The loading and removing device for loading and removing hams can be used for hooking the hams to the hooking device.

Systems are known for hooking a ham to a seasoning frame that provide the use of a plurality of hooks or nails with which transverse support bars of the seasoning frame are provided (e.g. EP 2 870 880 A1). Each ham is hooked onto a respective hook or nail by means of a cord or string that fastens both the shank of the ham, for example by a noose, and the hook or nail, for example forming a ring, so as to thus tie the ham to the seasoning frame. Each ham is then hung to a transverse supporting bar by the shank and hangs from the latter by gravity.

A drawback of such known hooking systems is that they do not enable the ham to be retained effectively during seasoning.

In fact, during seasoning, each ham is subject to a weight loss that can also be a considerable amount, for example the weight loss can be 30% compared with the weight of the ham before being subjected to the seasoning process.

The weight loss comprises a reduction in the dimensions of the ham, including those of the shank thereof. Consequently, it is possible that the ham may slip the noose and fall from the seasoning frame. The height at which the hams are hung can also be considerable.

This causes serious problems. First, the hams, by falling from a height, can cause injuries, also serious injuries, to operators transiting in the places in which the seasoning frames are placed. Even if operators are provided with personal protective equipment such as helmets for questions of safety due to the presence of suspended loads, the personal protective equipment may not be sufficient to ensure the safety of the operators when a ham falls from a great height.

In addition, by falling from a great height, the hams are damaged, and cannot be used as seasoned raw hams, so they are either eliminated or are intended to be subjected to processing in order to be able to be used otherwise.

In order to prevent the hams falling during seasoning from the seasoning frames, sometimes the respective shanks are drilled to be able to be hooked to further hooks, this leaving marks in the ham that remain visible even when at the end of seasoning they are removed from the seasoning frames, thus damaging the appearance thereof, in addition to entailing further processing at the moment of hooking the hams to the seasoning frames to create holes where to engage the further hooks.

A further drawback of the hooking systems of known type disclosed above is that for hygienic questions the cords or strings cannot be reused but are eliminated at the end of seasoning.

Loading devices for loading hams are further known that are arranged for loading hams onto a seasoning frame. Such loading devices for loading hams comprise at least one pair of grippers arranged for gripping a shank of a ham and at least one widening element, for example in the shape of scissors, arranged above the pair of grippers to be inserted into a cord or string that clasps the shank of the ham.

A drawback of such loading devices for loading hams is that they do not enable the hams to be removed from the conveying means or the hams to be positioned on the latter, but the hams have to be hung manually by operators onto such loading devices and removed from the latter manually by the operators to be arranged on the conveying means.

GB 406793 A discloses a meat suspending device comprising spiked jaws 3a, 4a on arms 3, 4 pivoted together at 6, and a sliding member 7 carrying a wedge piece 8 at its lower end to engage with inclined flanges 3c, 4c. The flange 3c is integral with the arm 3 and the flange 4c with the arm 4, so that the weight of the meat, by tending to draw the wedge 8 towards the hinge 6, closes the jaws with a force which increases with the weight of the meat.

US 71628 A discloses a device for hoisting hogs in slaughter-houses comprising a heavy iron bar A, the top of which is bent shoe-like, for the purpose of forming a support for flanged roller B and a place for an eyelet C, fixed on a swivel, so that it can turn around. The bottom end of the bar A is bent at a right angle and forms a foundation for the swivel double eyelet D, on which a clutch E is suspended by means of chains F F. The clutch E itself consists of two bent levers H H connected by the pin K.

US 3837699 A discloses meat-supporting tongs including a pair of arms 200 which are pivotally connected at 202 and have their upper ends supported by flexible chains 204 which connect to a suspending chain 124 at a ring 206. The suspending chain 124 is used to attach the tong support linkage to an overhead support rail. The lower ends of the arms 200 have extensions 208 which carry opposed plates 118 which carry a plurality of blunt projections for engaging the meat and pointed projecting members 216 which extend a greater distance than the blunt projections 212 to promote initial engagement between the plates 118 and the meat prior to movement of the blunt projections 212 into contact with the meat.

One object of the invention is to improve the hooking means for hooking a ham, in particular to a seasoning frame, of known type and the ham loading and removing devices, of known type.

Another object of the invention is to provide a hooking device for hooking a ham to a seasoning frame that is able to retain the ham effectively during the entire seasoning period, preventing the hams falling from the seasoning frame.

A further object is to provide a hooking device for hooking a ham to a seasoning frame that can be reused for a second ham at the end of seasoning of a first ham.

A further object is to make available a hooking device for hooking a ham to a seasoning frame that is simple and cheap to make and easy to install on the seasoning frame.

Still another object is to obtain a hooking device for hooking a ham to a seasoning frame that enables the ham to be hooked to and removed from the seasoning frame in a robotised manner.

Owing to the hooking device according to the invention, using cords or strings is eliminated and thus the costs linked thereto are eliminated.

In addition, the hooking device according to the invention has the advantage of enabling accidental falls of hams during seasoning to be prevented, inasmuch as the dimensions of the hooking device adapt to the variations in dimension of the ham during seasoning that are due to the weight loss. The hooking device according to the invention is thus able to maintain the ham always clamped inside thereof during the entire seasoning period. Owing to the fact that the hooking device according to the invention prevents accidental falls of the hams during seasoning, safety problems are avoided for operators who transit near the seasoning frames and having to eliminate or reuse the fallen ham differently is avoided.

Such objects and advantages and still others are all achieved by the hooking device for hooking a ham to a seasoning frame according to one or more of the claims set out below.

In particular, according to the invention, a hooking device is provided for hooking a ham to a seasoning frame according to claim 1.

The invention can be better understood and implemented with reference to the attached drawings that illustrate an embodiment thereof by way of non-limiting example in which:
Figure 1 is a front view of a pair of hams hooked to a seasoning frame by a respective hooking device according to the invention to which the hams can be hooked by a loading and removing device for loading and removing hams;
Figure 2 is a top view of one of the hooking means of Figure 1 in an open operating configuration;
Figure 3 is a top view of one of the hooking means of Figure 1 in a closed operating configuration;
Figure 4 is a side view of the hooking device of Figure 2 according to the invention and of a loading and removing device for loading and removing hams, which is not part of the invention, in a step of a sequence of hooking the ham to the hooking device;
Figure 5 is an enlarged detail of Figure 4;
Figure 6 is a side view of the hooking device of Figure 2 and of the loading and removing device for loading and removing hams of Figure 4 in a further step of a sequence of hooking the ham to the hooking device by the loading and removing device for loading and removing hams of Figure 4;
Figure 7 is an enlarged detail of Figure 6;
Figure 8 is a side view of the hooking device of Figure 2 and of the loading and removing device for loading and removing hams of Figure 4 in a step of a sequence of removing the ham from the hooking device by the loading and removing device for loading and removing hams of Figure 4;
Figure 9 is an enlarged detail of Figure 8;
Figure 10 is a side view of the hooking device of Figure 2 and of the loading and removing device for loading and removing hams of Figure 4 in a further step of a sequence of removing the ham from the hooking device by the loading and removing device for loading and removing hams of Figure 4;
Figure 11 is an enlarged detail of Figure 10;
Figure 12 is a top view of a plurality of hams arranged on conveying means before being removed by the loading and removing device for loading and removing hams of Figure 4 to be hooked to the seasoning frame or after being unloaded from the seasoning frame by the loading and removing device for loading and removing hams of Figure 4;
Figure 13 is a schematic top view of the loading and removing device for loading and removing hams of Figure 4 showing some components thereof;
Figure 14 is a side view of the loading and removing device for loading and removing hams of Figure 4 in a first step of removing hams from the conveying means of Figure 12;
Figure 15 is a side view of the loading and removing device for loading and removing hams of Figure 4 in a second step of removing hams from the conveying means of Figure 12.

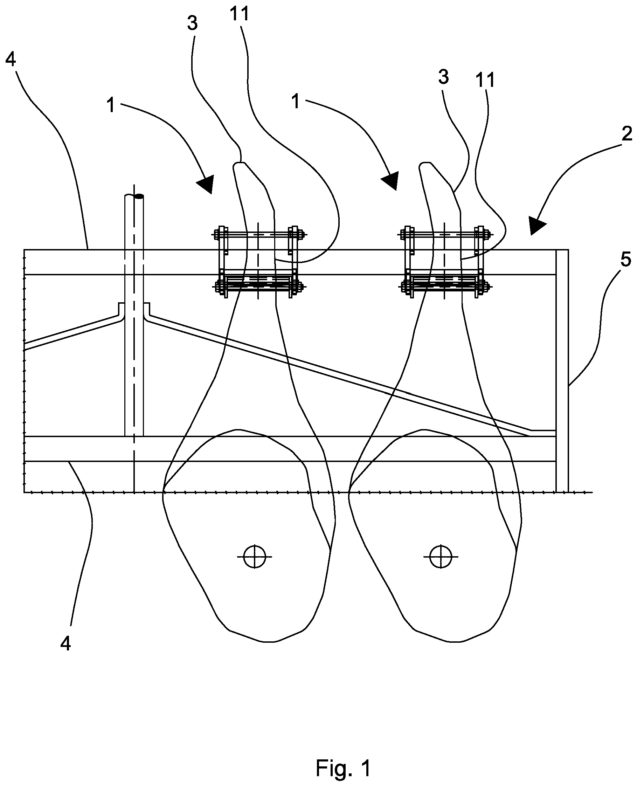

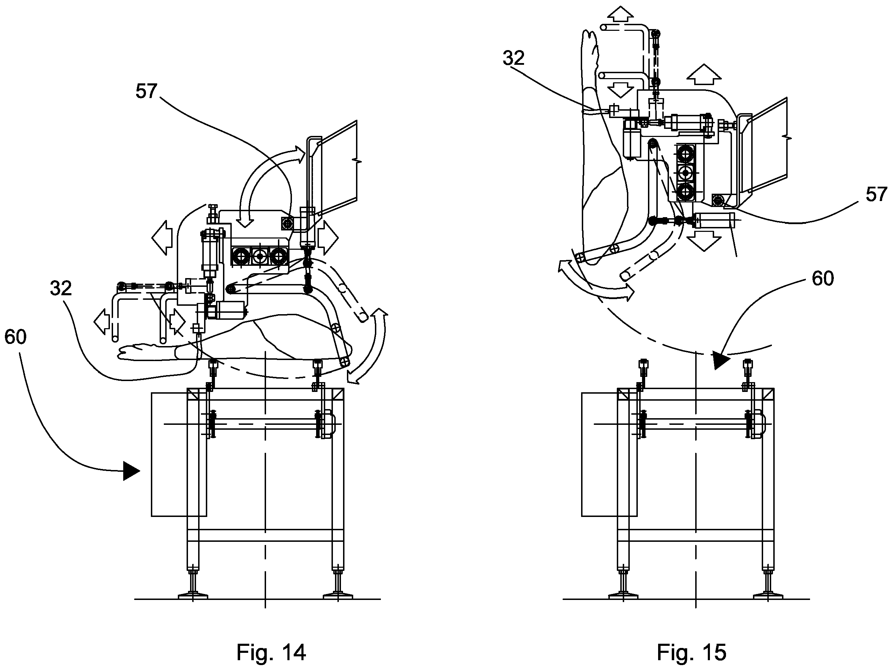

With reference to Figure 15, a loading and removing device 100 is shown for loading and removing hams 3, arranged for removing hams 3 from conveying means 60 and loading the hams 3 onto a seasoning frame 2 (Figure 1) and arranged for removing the hams 3 from the seasoning frame 2 and replacing the hams 3 on the conveying means 60.

The loading and removing device 100 can hook the hams 3 to a hooking device 1 like the one disclosed below, or to other hooking devices. As will be explained better below, when the hooking devices 1 are used, the hams 3 are devoid of cords or strings.

Alternatively, the loading and removing device 100 can also hook the hams 3 directly to hooks, which are not shown, with which the seasoning frame 2 can be provided by means of cords or strings fixed to the hams 3. When the hooking devices 1 are not being used, the hams 3 have to be provided with the cords or strings fixed around the respective shank 11.

With reference to Figure 1, a pair of hooking devices 1 according to the invention is shown, mounted on the seasoning or storage frame 2 for seasoning or storing hams 3 and arranged for hooking a respective ham 3 to the seasoning frame 2. The seasoning frame 2 is only partially shown in Figure 1. The hooking devices 1 can be used for hooking the hams 3 to the seasoning frame 2 by the loading and removing device 100 for loading and removing hams.

The seasoning frame 2 is provided with a plurality of supporting bars 4, in particular removable supporting bars 4, resting on respective pairs of supports 5 with which the seasoning frame 2 is provided, only one support 5 being visible in Figure 1.

In particular, the hams 3 are hung by a respective hooking device 1 to a supporting bar 4 of the seasoning frame 2.

The seasoning frame 2 can be arranged resting on ground, such as a floor of a seasoning warehouse, or on an earth-moving device, or can be hooked to an overhead guideway.

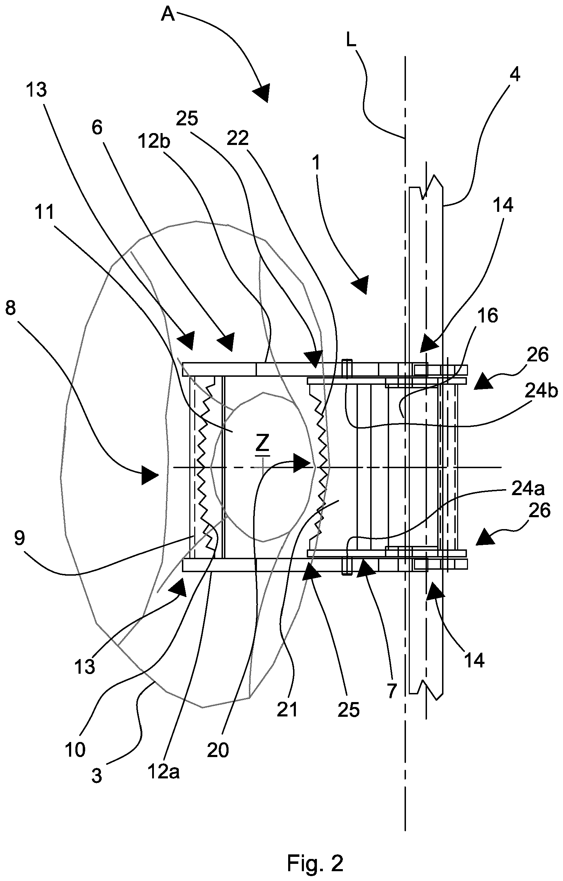

With reference to Figures 2 to 5, each hooking device 1 comprises a first jaw 6 and second jaw 7 arranged in use for cooperating together in order to surround a ham 3, in particular the shank 11 of the ham 3.

The first jaw 6 comprises a first end part 8 provided with a first plate 9 provided with a plurality of protruding elements 10, in particular teeth, arranged for engaging portions of the shank 11 of the ham 3.

The protruding elements 10 can be arranged for forming substantially a first C in a plan view. This arrangement enables the protruding elements 10 to wrap a larger portion of shank 11 than for example in the case in which the arrangement is linear, and thus enables the ham 3 to be gripped more effectively.

The protruding elements 10 protrude inside the hooking device 1.

The end part 8 extends prevalently in a direction that is substantially parallel to the supporting bar 4 when the hooking device 1 for hooking a ham 3 is mounted on the seasoning frame 2.

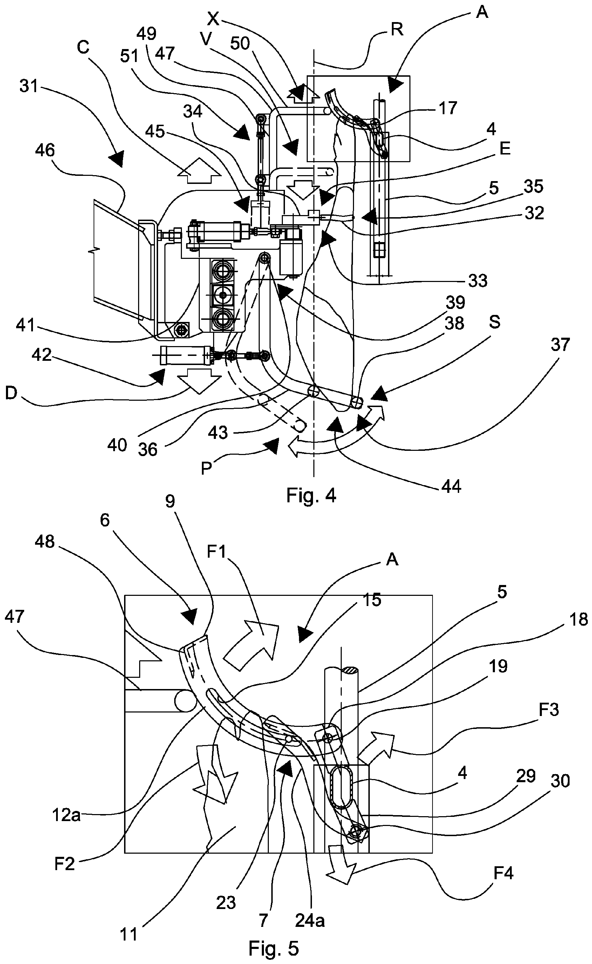

The first plate 9 can optionally have a substantially L-shaped section (Figure 5), where the protruding elements 10 protrude from one side of the L, for example the longer side.

The first jaw 6 further comprises a pair of connecting plates 12a, 12b that extend prevalently in a direction that is substantially perpendicular to the supporting bar 4 when the hooking device 1 for hooking a ham 3 is mounted on the seasoning frame 2. Each connecting plate 12a, 12b can have a substantially arc-shaped plan section.

Each connecting plate 12a, 12b comprises two opposite ends, a first end 13 and a second end 14.

The first ends 13 are mounted on opposite zones of the first plate 9. For example, the first ends 13 are fixed by welding or by connecting means of known type to the first plate 9.

In each connecting plate 12a, 12b an opening 15 is obtained. Each opening 15 can have a substantially arc-shaped plan section, i.e. can have the same conformation as the connecting plate 12a, 12b in which it is obtained.

The second ends 14 are mounted rotatably on a rotating element 16, for example a pin, which is inserted into suitable through holes 17 obtained in the connecting plates 12a, 12b. In particular, the second ends 14 are integrally rotatable around a longitudinal axis L of the rotating element 16, said longitudinal axis L being substantially parallel to the supporting bar 4 when the hooking device 1 for hooking a ham 3 is mounted on the seasoning frame 2. The rotating element 16 extends prevalently substantially parallel to the supporting bar 4 when the hooking device 1 for hooking a ham 3 is mounted on the seasoning frame 2.

The rotating element 16 can be fixed to the supporting bar 4 by a pair of fixing plates 18 in which holes 19 are obtained into which the rotating element 16 is insertable.

Owing to the rotating element 16 and to the fixing plates 18, the first jaw 6 is connected to the supporting bar 4 so as to be able to rotate upwards or downwards, i.e. in a first oscillation direction F1 or in a second oscillation direction F2 indicated by a respective arrow in Figure 5.

The second jaw 7 comprises an end zone 20 provided with a second plate 21 provided with a plurality of further protruding elements 22, in particular teeth, arranged for engaging further portions of meat of the shank 11 of the ham 3. The further protruding elements 22 are substantially similar to the protruding elements 10 of the first jaw 6.

The second plate 21 can optionally have a substantially arc-shaped section, where the further protruding elements 22 protrude from an end of the arc.

The further protruding elements 22 can be arranged for forming substantially a second C in a plan view. This arrangement enables the further protruding elements 22 to wrap a larger portion of shank 11 than for example in the case in which arrangement is linear, and thus enables the ham 3 to be gripped more effectively.

The further protruding elements 22 protrude inside the hooking device 1, i.e. to the protruding elements 10.

A profile of the protruding elements 10 and a profile of the further protruding elements 22 define a gripping zone Z for the shank 11 of the ham 3. When the protruding elements 10 and the further protruding elements 22 are arranged substantially in a C, the gripping zone Z, in a top view, is substantially rhombus-shaped with curved sides, like an almond.

The end zone 20 extends prevalently in a direction that is substantially parallel to the supporting bar 4 when the hooking device 1 for hooking a ham 3 is mounted on the seasoning frame 2.

From opposite sides of the second plate 21 at least two engaging elements 23 project that are arranged for each being inserted inside a respective opening 15 so as to connect reciprocally the second jaw 7 to the first jaw 6.

Owing to this conformation and arrangement, the second jaw 7 can be moved towards or away from the first jaw 6.

In particular, the second plate 21 is movable towards or away from the first plate 9 in order to vary a dimension of the gripping zone Z so as to compensate for variations in the dimensions of the shank 11 due to the weight loss that occurs in the ham 3 during seasoning.

The conformation of the openings 15 is such that the second plate 21 is able to approach the first plate 9 through gravity during seasoning of the ham 3. In this manner, the gripping zone Z adapts automatically to weight reductions of the ham 3 during seasoning thereof.

Each engaging element 23 can be substantially stem-shaped.

The second jaw 7 further comprises a pair of side plates 24a, 24b that extend prevalently in a direction that is substantially perpendicular to the supporting bar 4 when the hooking device 1 for hooking a ham 3 is mounted on the seasoning frame 2. Each side plate 24a, 24b can have a substantially S-shaped or upturned S-shaped plan section (Figure 5).

Each side plate 24a, 24b comprises two opposite ends, a first end 25 and a second end 26. The first ends 25 are mounted on opposite zones of the second plate 21. For example, the first ends 25 are fixed by welding or by connecting means of known type to the second plate 21.

Like the second ends 14 of each connecting plate 12a, 12b, also the second ends 26 of each side plate 24a, 24b are mounted rotatably on a rotation member 27, for example a pin, which is completely similar to the rotating element 16, which is inserted into through holes 28 obtained in the side plates 24a, 24b.

In particular, the second ends 25 are integrally rotatable around a longitudinal axis M of the rotation member 27, said longitudinal axis M being substantially parallel to the supporting bar 4 when the hooking device 1 for hooking a ham 3 is mounted on the seasoning frame 2 and being substantially parallel to the longitudinal axis L of the rotating element 16.

The rotation member 27 extends prevalently substantially parallel to the supporting bar 4 when the hooking device 1 for hooking a ham 3 is mounted on the seasoning frame 2.

The rotation member 27 can be fixed to the supporting bar 4 by a pair of mounting plates 29 in which holes 30 are obtained into which the rotation member 27 is insertable and fixable.

The fixing plates 18 can be mounted in such a manner as to protrude above the supporting bar 4, i.e. away from the ground, whereas the mounting plates 29 can be mounted in such a manner as to protrude below the supporting bar 4, i.e. away from the ground.

Owing to the rotation member 27 and to the mounting plates 29, the second jaw 7 is connected to the supporting bar 4 so as to be able to rotate upwards or downwards, i.e. in a first rotation direction F3 or in a second rotation direction F4, the first rotation direction F3 and the second rotation direction F4 being indicated by a respective arrow in Figure 5.

The first rotation direction F3 is concordant to the first oscillation direction F1 whereas the second rotation direction F4 is concordant to the second oscillation direction F2 inasmuch as the rotation of the first jaw 6 around the rotating element 16 drags with it the second jaw 7, connected to the first hook by inserting the engaging elements 23 into the openings 15. The hooking device 1 can be made as a single piece or the various components thereof can be joined by connecting means of known type or by welding.

Once the hooking device 1 is mounted on the seasoning frame 2, each ham 3 can be loaded onto, or be removed from, the respective hooking device 1 by the loading and removing device 100 for loading and removing hams 3 onto/from the hooking device 1.

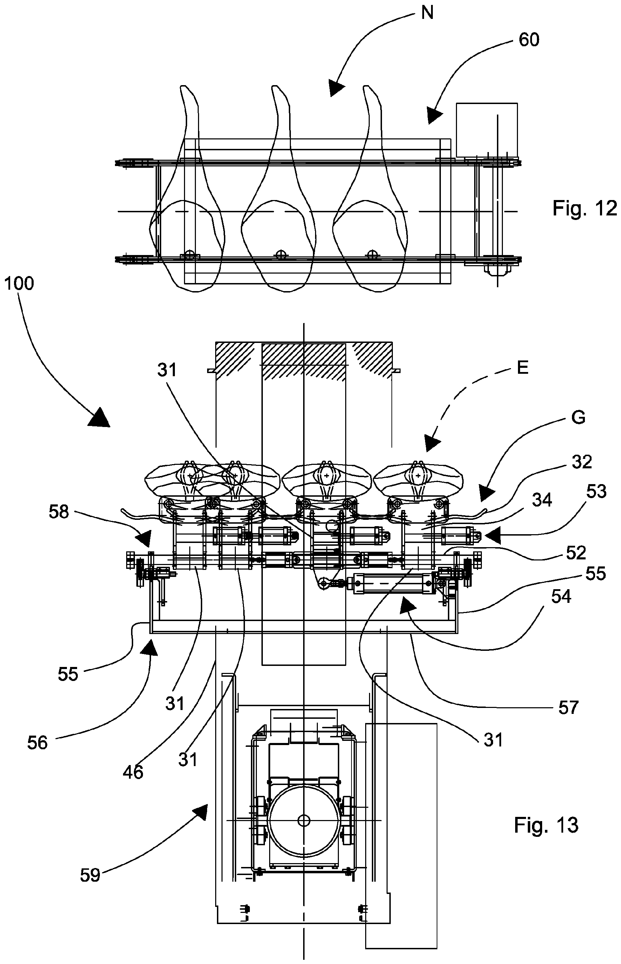

With reference in particular to Figure 13, the loading and removing device 100 for loading and removing hams 3 comprises a plurality of loading and removing units for loading and removing hams 31, each unit 31 being arranged for loading a ham 3 onto and removing a ham 3 from a hooking device 1. In Figure 13, four loading and removing units for loading and removing hams 31 are shown schematically, where some components have been eliminated to highlight others. Naturally, also a different number of loading and removing units 31 for loading hams into and removing hams from a loading and removing device 100 can be provided.

With reference in particular to Figures 4 to 11 and 13, each loading and removing unit 31 comprises gripping means comprising a pair of hooking arms 32 shown schematically in Figure 13, connected at a first end 33 thereof to a support element 34. A second end 35 thereof, opposite the first end 33, is intended for hooking laterally a portion of a shank 11 for hooking a ham 3 during the operations of inserting the ham 3 onto the hooking device 1or removing the ham 3 from the hooking device 1.

Each support element 34 is slidingly connected to a connecting crosspiece 52. In fact, each loading and removing unit 31 can be slid along the connecting crosspiece 52 by respective lateral movement means 53 to vary a distance between two adjacent loading and removing units 31. This enables the distance to be adjusted between the loading and removing units 31 according to the distance between the hooking devices 1 mounted on the seasoning frame 2 with which they have to interact in use.

The lateral movement means 53 can comprise, for example, hydraulic or pneumatic operating cylinders, for example connected to a respective support element 34.

In addition to the variation in the distance between the axis of the single loading and removing units 31, it is also possible to move all the loading and removing units 31 together along the connecting crosspiece 52 by lateral collective movement means 54, for example comprising a motor.

In use, the hooking arms 32 are movable between an engaged position E, shown in Figures 4 to 11 and in Figure 13 by a dashed line, in which the hooking arms 32 are moved together to clamp between themselves a portion of the shank 11 of the ham 3 and retain the latter during the operations of placing of a ham 3 on the hooking device 1 or of removing a ham 3 from the hooking device 1, and a disengaged position G, illustrated in Figure 13, in which the hooking arms 32 are moved away from one another to free the portion of shank 11 of the ham 3 from the grip of the hooking arms 32.

In particular, the hooking arms 32 are rotatable around a rotation axis R substantially parallel to the supports 5 and substantially perpendicular to the longitudinal axis L of the rotating element 16 and to the longitudinal axis M of the rotation member 27.

The hooking arms 32 can be rotated around the rotation axis R by movement means 45 comprising, for example, hydraulic or pneumatic operating cylinders, which act on the two hooking arms 32.

The hooking arms 32 of two adjacent loading and removing units 31 can be arranged at staggered heights, such that when the aforesaid hooking arms 32 are arranged in the disengaged position G they do not come into reciprocal contact.

Each loading and removing unit 31 further comprises supporting means comprising a pair of supporting arms 36, only one of which is shown in Figures (in Figure 13 they have been removed), connected to a first end 37 thereof by a crosspiece 38. A second end 39, opposite the first end 37, of each supporting arm 36 is hinged on a respective fulcrum 40 on a support device 41.

The supporting arms 36 can be rotated around respective fulcrums 40 by driving means 42 comprising, for example, hydraulic or pneumatic operating cylinders, which act on the two supporting arms 36.

The supporting arms 36 are connected together also by a further crosspiece 43 arranged for connecting two portions of opposite supporting arms 36 that are arranged between the first ends 37 and the second ends 39 of the supporting arms 36.

The crosspiece 38 and the further crosspiece 43 are intended for restingly supporting a lower zone 44 of a ham 3 during the operations of inserting the ham 3 onto the hooking device 1or removing the ham 3 from the hooking device 1.

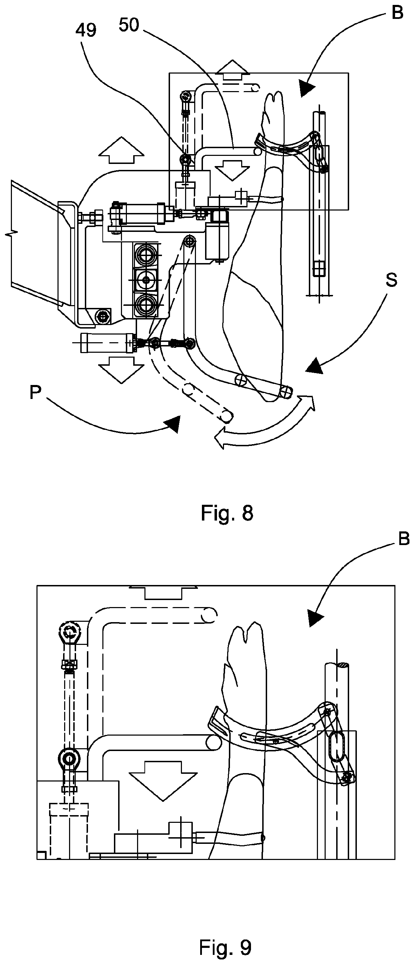

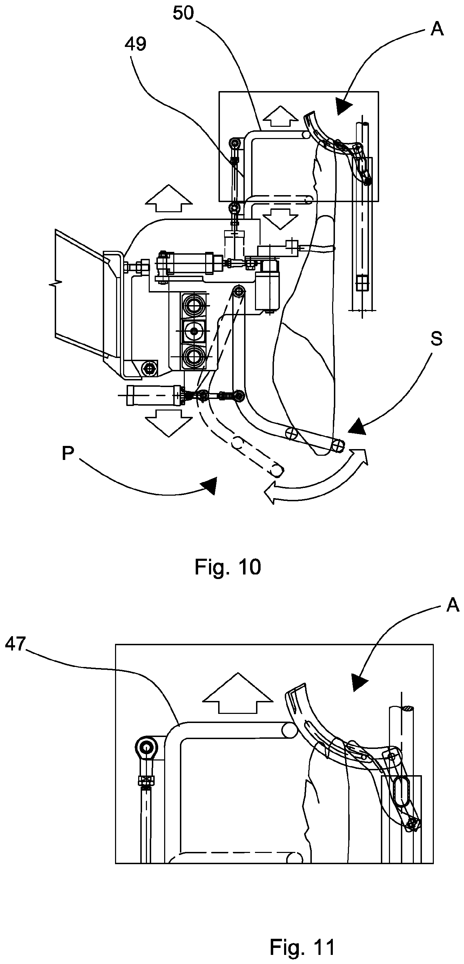

The supporting arms 36 are movable between a support position S, shown by a continuous line in the Figures, in which the crosspiece 38 and the further crosspiece 43 interact with portions of the lower zone 44, and a release position P, shown by a dashed line in Figures 8 and 10, in which the crosspiece 38 and the further crosspiece 43 do not interact with portions of the lower zone 44 and, in particular, the supporting arms 36 are rotated downwards with respect to the support position S.

The ham loading and removing device 100 comprises a pair of side arms 55, connected at a first end 56 by a bar 57. A second end 58 of the side arms 55, opposite the first end 56 is intended to support the connecting crosspiece 52 to which the loading and removing units 31 are connected.

The ham loading and removing device 100 can be fixed to a robotic arm 46 of a loading and unloading robot 59 for loading and unloading hams that moves the ham loading and removing device 100 upwards or downwards, i.e. towards or away from the hooking devices 1, to enable, respectively, hams 3 to be inserted into or hams 3 to be removed from the hooking devices 1 (or from other hooking devices) once the latter are mounted on the seasoning frame 2.

The ham loading and removing device 100 is thus movable upwards, i.e. in an inserting direction C for inserting the hams 3 and downwards, i.e. in a removing direction D for removing the hams 3, the inserting direction C and the removing direction D being shown, each, with an arrow in Figures 4, 6, 8 and 10.

The inserting direction C and the removing direction D are substantially parallel to the supports 5 and are substantially perpendicular to the ground.

Each loading and removing unit 31 further comprises a lifting rod 47, arranged for interacting with the first plate 9, in particular with a lower portion 48 thereof, in order to rotate the first jaw 6 around the rotating element 16 in the first oscillation direction F1 and, consequently, the second jaw 7 around the rotation member 27 in the first rotation direction F3. The rotations of the first jaw 6 and of the second jaw 7 make the first plate 9 move away from the second plate 21 inasmuch as the lifting of the first jaw 6 causes the engaging elements 23 to slide in the respective opening 15 towards the second ends 14 of the connecting plates 12. In this manner, it is possible to widen the gripping zone Z to enable a ham 3 to be inserted into, or a ham 3 to be removed from the respective hooking device 1.

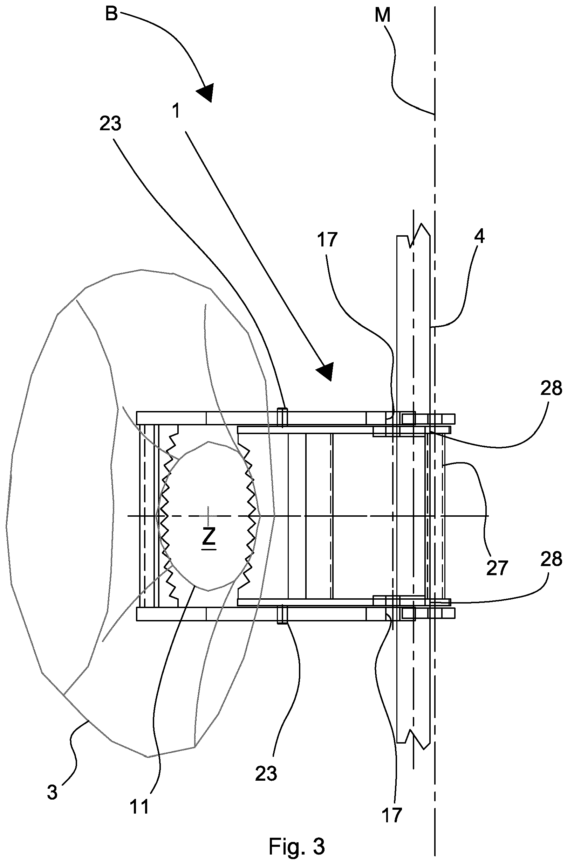

Owing to the interaction of the lifting rod 47 with the lower portion 48 of the first plate 9, each hooking device 1 can be taken to an open operating configuration A, shown in Figures 2, 4 and 5, in Figures 8 and 9 by a dashed line and in Figures 10 and 11 with a continuous line, in which the second plate 21 is moved away from the first plate 9, thus increasing the dimension of the gripping zone Z and consequently enabling a ham 3 to be inserted inside the gripping zone Z or the protruding elements 10 and the further protruding elements 22 to be disengaged and the ham 3 to be thus removed from the gripping zone Z. Without the interaction of the lifting rod 47 with the lower portion 48 of the first plate 9, the hooking device 1 is in a closed operating configuration B, shown in Figures 3, 6 and 7, in Figures 8 and 9 by a continuous line and in Figures 10 and 11 by a dashed line, in which through gravity the second jaw 7 is nearer the first jaw 6 than the open operating configuration A and the gripping zone Z occupies a minimum dimension determined by the minimum distance between the protruding elements 10 and the further protruding elements 22 (when no ham 3 is inserted into the hooking device 1) or occupies an intermediate dimension of use determined by the thickness of the shank 11 of the ham 3 (when a ham 3 is inserted into a hooking device 1).

In particular, the openings 15 are shaped in such a manner as to slide the second plate 21 towards the first plate 9 when it is wished to place the hooking device 1 in the closed operating configuration B (i.e. a dimension of the gripping zone Z is decreased), and to slide the second plate 21 away from the first plate 9 when it is wished to place the hooking device 1 in the open operating configuration A (i.e. a dimension of the gripping zone Z is increased).

The lifting rod 47 can comprise a first portion 49 and a second portion 50 that substantially form an L. The length of the first portion 49 with respect to the second portion 50 is variable, as is also the connecting angle between the first portion 49 and the second portion 50.

For example, the connecting angle can be substantially about 90 degrees, as illustrated in the Figures, and the first portion 49 is shorter than the second portion 50, but of course the connecting angle, the first portion 49 and the second portion 50 can also have different dimensions from those shown in the Figures.

The lifting rod 47 is driven to move by lifting means 51 between a lowered position V, in which the lifting rod 47 does not interact with the lower portion 48 of the first plate 9, and a raised position X, in which the lifting rod 47 interacts with the lower portion 48 of the first plate 9.

The lifting means 51 comprises, for example, hydraulic or pneumatic operating cylinders, for example connected to the first portion 49.

In an alternative version, not shown in the Figures, the lifting rod 47 can be fixed and interacts or does not interact with the lower portion 48 of the first plate 9 when the ham loading and removing device 100 is moved along the inserting direction C or along the removing direction D, respectively.

The ham loading and removing device 100 further comprises actuating means, not shown in the Figures, arranged for rotating the loading and removing units 31 by about 90° around the bar 57.

The hooking device 1 and, in particular, the first jaw 6 and the second jaw 7, can perform the sequence of movements illustrated in Figures 4 to 11.

In particular, Figures 4 to 7 show a sequence of hooking hams 3 to respective hooking devices 1 mounted on the seasoning frame 2, whereas Figures 8 to 11 show a sequence of removing of hams 3 from the respective hooking devices 1 mounted on the seasoning frame 2.

Figure 12 shows a plurality of hams 3 arranged aligned on a resting surface of conveying means 60, of known type, and with the shanks 11 facing the same way. The conveying means 60 is arranged for supporting and moving the hams 3 to take the hams 3 to a removing zone N from where they can be removed by the ham loading and removing device 100.

Figures 14 and 15 show, respectively, a side view of the loading and removing device 100 in a first step of removing hams 3 from the conveying means 60, in which the hams 3 restingly arranged on the conveying means 60 are hooked by the loading and removing device 100 for loading and removing hams 3, and a side view of the loading and removing device 100 in a second step of removing the hams 3 from the conveying means 60, in which the hams 3 are lifted from the conveying means 60 and rotated, in particular substantially by about 90°.

In use, when it is wished to hook hams 3 to the hooking devices 1 previously mounted on the seasoning frame 2 in a closed operating configuration B, the ham loading and removing device 100 is taken to near the removing zone N and the loading and removing units 31 are rotated by the actuating means in particular by about 90° so as to approach the conveying means 60 on which the hams 3 are arranged (Figure 14). The hooking arms 32 are arranged in the engaged position E and the supporting arms 36 are arranged in the support position S, such that the ham loading and removing device 100 can block the hams 3.

By the robotic arm 46, the ham loading and removing device 100 is driven along the inserting direction C such that the hams 3 are lifted from the conveying means 60. At this point, the loading and removing units 31 are again rotated by the actuating means, in particular by about 90° so as to take the hams 3 to a position in which they have the shanks 11 facing upwards (Figure 15).

By the robotic arm 46, the ham loading and removing device 100 is taken by the loading and unloading robot 59 to near the seasoning frame 2, and, then, to near the hooking devices 1 mounted thereupon. In particular, the ham loading and removing device 100 takes each ham 3 below the gripping zone Z of the respective hooking device 1 and moves each ham 3 along the inserting direction C. During movement of the ham loading and removing device 100 along the inserting direction C, each lifting rod 47 interacts with a respective lower portion 48 to enable the gripping zone Z to widen and thus enable the shank 11 to enter inside the gripping zone Z (Figures 4 and 5).

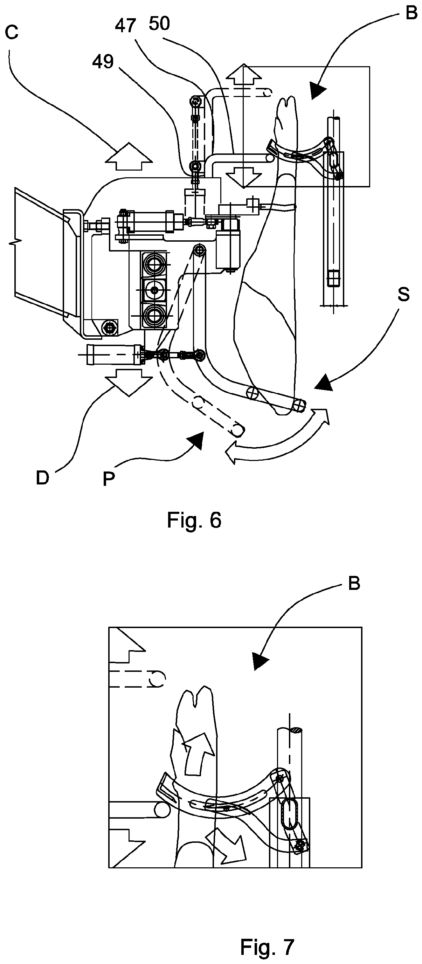

When the ham loading and removing device 100 is taken to a height that is such that the lifting rods 47 no longer interact with the respective lower portion 48, each first jaw 6 rotates through gravity downwards, i.e. in the second oscillation direction F2, dragging with itself the respective second jaw 7. The protruding elements 10 and the further protruding elements 22 engage in respective portions of meat of the ham 3, retaining the ham inside the gripping zone Z (Figures 6 and 7).

At this point, the hooking arms 32 of each ham loading and removing unit 31 are taken to the disengaged position G, the supporting arms 36 are taken to the release position P and the ham loading and removing device 100 moves away from the hams 3, leaving the latter hooked to the respective hooking device 1, inasmuch as the hooking devices 1 has adopted the closed operating configuration B.

When, on the other hand, it is wished to remove the hams 3 hooked to a respective hooking device 1 mounted on the seasoning frame 2, which is therefore in a closed operating configuration B, the ham loading and removing device 100 is moved by the robotic arm 46 near the hams 3. In particular, the supporting arms 36 of each ham loading and removing unit 31 are taken from the release position P (Figure 8 shown by a dashed line) to the support position S such that the crosspiece 38 and the further crosspiece 43 can support the hams 3 by the lower zone 44 (Figures 8 to 9 shown by a continuous line). The hooking arms 32 of each ham loading and removing unit 31 are arranged in the engaged position E so as to surround at least one portion of the shank 11 of the respective ham 3 (Figures 8 and 9 shown by a continuous line).

Subsequently, the ham loading and removing device 100 is moved in the inserting direction C. During movement of the ham loading and removing device 100 along the inserting direction C, each lifting rod 47 interacts with the respective lower portion 48 to enable the gripping zone Z to widen and thus enable the protruding elements 10 and the further protruding elements 22 to release the respective portions of ham 3 into which they had been inserted, such that each ham 3 can be removed from the respective hooking device 1 (Figures 10 and 11, continuous line) into which it was previously hooked, inasmuch as each hooking device 1 has adopted the open operating configuration A.

At this point, the hams 3 can be repositioned by the ham loading and removing device 100 on the conveying means 60. In particular, the ham loading and removing device 100 is taken by the loading and unloading robot 59 at the removing zone N and the loading and removing units 31 are rotated by the actuating means in particular by about 90° so as to approach the conveying means 60 on which the hams 3 have to be positioned. The hooking arms 32 are arranged in the disengaged position G and the supporting arms 36 are arranged in the release position P, such that the hams 3 are freed from the grip of the hooking arms 32 and from the support of the supporting arms 36 and can be restingly arranged on the conveying means 60. By the robotic arm 46, the ham loading and removing device 100 is then driven along the inserting direction C so as to move away from the conveying means 60. At this point, the loading and removing units 31 are again rotated by the actuating means, in particular by about 90°.

Each hooking device 1 according to the invention enables a ham 3 to be maintained hooked during the entire seasoning step, also if the ham 3 suffers a weight loss. In fact, the plan area of the gripping zone Z adapts automatically to the varying dimensions during seasoning of a section of the shank 11 of the ham 3, inasmuch as the first plate 9 of the first jaw 6 descends through gravity downwards, dragging with itself the second plate 21 of the second jaw 7. In fact, the openings 15 are shaped in such a manner as to slide the second plate 21 towards the first plate 9 when the latter rotates in the second oscillation direction F2 through the force of gravity, as occurs when the ham 3 loses weight, thus decreasing the dimension of the gripping zone Z.

This prevents the ham 3 falling from the seasoning frame 2, which could entail harm to operators or the loss of the ham 3 because the latter would suffer shocks and the features would be therefore missing that would make the ham suitable for being used as a seasoned ham.

In addition, the step of loading a ham 3 onto the seasoning frame 2 or the step of removing the ham 3 from the seasoning frame 2 can be made robotisable owing to the ham loading and removing device 100.

Further, the hooking devices 1 according to the invention enable the hams 3 to be maintained in position and spaced on the seasoning frame 2, such that they do not get marked because air does not pass in a uniform manner over the outer surface of the hams 3. Lastly, the hooking devices 1 according to the invention can be reused for further hams 3, for example after being subjected to a washing operation.

As explained previously, the ham loading and removing device 100 can hook the hams 3 also directly to the seasoning frame 2 without the hooking devices 1 having to be provided. Hooking devices can in fact be provided of a different type from what has been disclosed above, or hooks or nails onto which the cords or strings of the hams 3 can be placed. In this case, the lifting rod 47 can also not be provided. A widening element, for example in the shape of scissors, can be provided, arranged above the hooking arms 32 to be inserted into a cord or string that can fasten the shank 11 of each ham 3.

The ham loading and removing device 100 enables hams 3 to be hooked to, and hams 3 to be removed from, the seasoning frame 2 or from the hooking devices 1 for hooking hams 3 mounted on the seasoning frame 2, in a robotised manner. Further, owing to the loading and removing device for loading and removing hams, the hams 3 can be loaded onto the seasoning frames 2 in a completely robotised manner. In fact, the ham loading and removing device 100 enables the hams 3 to be removed directly from the conveying means 60 that supplies the hams 3 to the removing zone N, without an operator having to hook the hams 3 by hand onto the ham loading and removing device 100 and enables the hams 3 to be arranged on the conveying means 60 once they have been removed from the seasoning frame 2, without an operator having to release the hams 3 by hand from the ham loading and removing device 100.

## Claims

1. Hooking device (1) for hooking a ham (3) to a seasoning frame (2) comprising a first jaw (6) and a second jaw (7) arranged for hooking a shank (11) of said ham (3);
- said first jaw (6) comprising a first end part (8) provided with a first plate (9) provided with a plurality of protruding elements (10), arranged for engaging portions of said shank (11),
- said second jaw (7) comprising an end zone (20) provided with a second plate (21) provided with a plurality of further protruding elements (22) arranged for engaging further portions of said shank (11),
- a profile of said protruding elements (10) and a profile of said further protruding elements (22) defining a gripping zone (Z) for said shank (11),
- said second jaw (7) being provided with engaging elements (23) arranged for engaging respective openings (15) of said first jaw (6) to connect said second jaw (7) to said first jaw (6),
in which said first plate (9) through the force of gravity is rotatable in an oscillation direction (F2), said openings (15) being shaped in such a manner that said second plate (21) slides towards said first plate (9) decreasing a dimension of said gripping zone (Z), when said first plate (9) rotates through the effect of the force of gravity; said hooking device (1) being **characterised in that** said first jaw (6) further comprises a pair of connecting plates (12a, 12b) provided with respective first ends (13) and opposite second ends (14), said first ends (13) being mounted to opposite zones of said first plate (9) and said second ends (14) being mounted rotatably on a rotating element (16).

2. Hooking device (1) for hooking a ham (3) according to claim 1, wherein said openings (15) are obtained in said connecting plates (12a, 12b).

3. Hooking device (1) for hooking a ham (3) according to claim 1 or 2, wherein each connecting plate (12a, 12b) has a substantially arc-shaped plan section.

4. Hooking device (1) for hooking a ham (3) according to any preceding claim, wherein said second jaw (7) further comprises a pair of side plates (24a, 24b) provided with respective first ends (25) and opposite second ends (26), said first ends (25) being mounted on opposite zones of said second plate (21) and said second ends (26) being mounted rotatably on a rotation member (27).

5. Hooking device (1) for hooking a ham (3) according to claim 4, wherein each side plate (24a, 24b) has a substantially S-shaped or upturned S-shaped plan section.

6. Hooking device (1) for hooking a ham (3) according to claim 4 or 5, wherein said rotating element (16) and said rotation member (27) are pins having respective longitudinal axes (L, M) that are substantially parallel.

7. Hooking device (1) for hooking a ham (3) according to any one of claims 4 to 6, wherein said first jaw (6) is connected to a supporting bar (4) of said seasoning frame (2) so as to be able to rotate around said rotating element (16) in said oscillation direction (F2), and said second jaw (7) is connected to said supporting bar (4) so as to be able to rotate around said rotation member (27) in a rotation direction (F4), said second rotation direction (F4) being concordant to said second oscillation direction (F2), a rotation of said first jaw (6) around said rotating element (16) dragging with itself said second jaw (7).

8. Hooking device (1) for hooking a ham (3) according to any preceding claim, wherein said profile of said protruding elements (10) and said profile of said further protruding elements (22) each have a substantially C-shaped plan form.

9. Hooking device (1) for hooking a ham (3) according to any preceding claim, wherein each opening (15) has a substantially arc-shaped section.

## Patentansprüche

1. Aufhängvorrichtung (1) zum Aufhängen eines Schinkens (3) an einem Trocknungsrahmen (2) mit einem ersten Backen (6) und einem zweiten Backen (7), die angeordnet sind, um eine Keule (11) des Schinkens (3) aufzuhängen;
- wobei der erste Backen (6) ein erstes Endteil (8) aufweist, das mit einer ersten Platte (9) versehen ist, die eine Mehrzahl von vorstehenden Elementen (10) aufweist, die angeordnet sind, um an Teilen der Keule (11) anzugreifen,
- wobei der zweite Backen (7) eine Endzone (20) aufweist, die mit einer zweiten Platte (21) versehen ist, die eine Mehrzahl von weiteren vorstehenden Elementen (22) aufweist, die angeordnet sind, um an weiteren Bereichen der Keule (11) anzugreifen,
- wobei ein Profil der vorstehenden Elemente (10) und ein Profil der weiteren vorstehenden Elemente (22) eine Greifzone (Z) für die Keule (11) definiert,
- wobei der zweite Backen (7) mit Eingriffselementen (23) versehen ist, die angeordnet sind, um an entsprechenden Öffnungen (15) des ersten Backens (6) anzugreifen, um den zweiten Backen (7) mit dem ersten Backen (6) zu verbinden,
wobei die erste Platte (9) durch die Gravitationskraft in einer Oszillationsrichtung (F2) drehbar ist, wobei die Öffnungen (15) auf eine solche Weise geformt sind, dass die zweite Platte (21) zu der ersten Platte (9) gleitet, wodurch eine Ausdehnung der Greifzone (Z) verkleinert wird, wenn sich die erste Platte (9) durch die Wirkung der Gravitationskraft dreht; wobei die Aufhängvorrichtung (1) **dadurch gekennzeichnet ist, dass** der erste Backen (6) ferner ein Paar von Verbindungsplatten (12a, 12b) aufweist, die mit entsprechenden ersten Enden (13) versehen sind, und gegenüber mit zweiten Enden (14), wobei die ersten Enden (13) an gegenüberliegenden Zonen der ersten Platte (9) aufgenommen sind, und wobei die zweiten Enden (14) drehbar an einem Drehelement (16) aufgenommen sind.

2. Aufhängvorrichtung (1) zum Aufhängen eines Schinkens (3) nach Anspruch 1, bei der die Öffnungen (15) in den Verbindungsplatten (12a, 12b) vorgesehen sind.

3. Aufhängvorrichtung (1) zum Aufhängen eines Schinkens (3) nach Anspruch 1 oder 2, bei der jede Verbindungsplatte (12a, 12b) einen im Wesentlichen bogenförmigen ebenen Bereich aufweist.

4. Aufhängvorrichtung (1) zum Aufhängen eines Schinkens (3) nach irgendeinem vorhergehenden Anspruch, bei der der zweite Backen (7) ferner ein Paar von Seitenplatten (24a, 24b) aufweist, die mit entsprechenden ersten Enden (25) und gegenüberliegenden zweiten Enden (26) versehen sind, wobei die ersten Enden (25) an gegenüberliegenden Zonen der zweiten Platte (21) befestigt sind, und wobei die zweiten Enden (26) drehbar an einem Drehelement (27) befestigt sind.

5. Aufhängvorrichtung (1) zum Aufhängen eines Schinkens (3) nach Anspruch 4, bei der jede Seitenplatte (24a, 24b) einen im Wesentlichen S-förmigen oder umgedreht S-förmigen ebenen Bereich aufweist.

6. Aufhängvorrichtung (1) zum Aufhängen eines Schinkens (3) nach Anspruch 4 oder 5, bei der das Drehelement (16) und das Drehelement (27) Stifte sind, die entsprechende Längsachsen (L, M) aufweisen, die im Wesentlichen parallel sind.

7. Aufhängvorrichtung (1) zum Aufhängen eines Schinkens (3) nach irgendeinem der Ansprüche 4 bis 6, bei der der erste Backen (6) mit einem Stützstab (4) des Trocknungsrahmens (2) verbunden ist, um es zu ermöglichen, das Drehelement (16) in der Oszillationsrichtung (F2) zu drehen, und wobei der zweite Backen (7) mit dem Stützstab (4) verbunden ist, um eine Drehung um das Drehelement (27) in einer Drehrichtung (F4) zu erlauben, wobei die zweite Drehrichtung (F4) mit der zweiten Oszillationsrichtung (F2) übereinstimmt, wobei eine Drehung des ersten Backens (6) um das Drehelement (16) den zweiten Backen (7) selbst mitzieht.

8. Aufhängvorrichtung (1) zum Aufhängen eines Schinkens (3) nach irgendeinem vorhergehenden Anspruch, bei der das Profil der vorstehenden Elemente (10) und das Profil der weiteren vorstehenden Elemente (22) jeweils eine im Wesentlichen C-förmige ebene Form hat.

9. Aufhängvorrichtung (1) zum Aufhängen eines Schinkens (3) nach irgendeinem vorhergehenden Anspruch, bei der jede Öffnung (15) einen im Wesentlichen bogenförmig gekrümmten Bereich aufweist.

## Revendications

1. Dispositif d'accrochage (1) pour accrocher un jambon (3) à un châssis d'assaisonnement (2) comprenant une première mâchoire (6) et une seconde mâchoire (7) agencées pour accrocher un jarret (11) dudit jambon (3) ;
- ladite première mâchoire (6) comprenant une première partie d'extrémité (8) pourvue d'une première plaque (9) pourvue d'une pluralité d'éléments en saillie (10) agencés pour venir en prise avec des portions dudit jarret (11),
- ladite seconde mâchoire (7) comprenant une zone d'extrémité (20) pourvue d'une seconde plaque (21) pourvue d'une pluralité d'autres éléments en saillie (22) agencés pour venir en prise avec d'autres portions dudit jarret (11),
- un profil desdits éléments en saillie (10) et un profil desdits autres éléments en saillie (22) définissant une zone de saisie (Z) pour ledit jarret (11),
- ladite seconde mâchoire (7) étant pourvue d'éléments de mise en prise (23) agencés pour venir en prise avec des ouvertures (15) respectives de ladite première mâchoire (6) pour raccorder ladite seconde mâchoire (7) à ladite première mâchoire (6),
dans lequel ladite première plaque (9) peut pivoter au moyen de la force de gravité dans une direction d'oscillation (F2), lesdites ouvertures (15) étant formées de telle sorte que ladite seconde plaque (21) coulisse vers ladite première plaque (9) en diminuant une dimension de ladite zone de saisie (Z), lorsque ladite première plaque (9) pivote par l'effet de la force de gravité ; ledit dispositif d'accrochage (1) étant **caractérisé en ce que** ladite première mâchoire (6) comprend en outre une paire de plaques de raccordement (12a, 12b) pourvues de premières extrémités (13) respectives et de secondes extrémités (14) opposées, lesdites premières extrémités (13) étant montées sur des zones opposées de ladite première plaque (9) et lesdites secondes extrémités (14) étant montées de manière pivotante sur un élément pivotant (16).

2. Dispositif d'accrochage (1) pour accrocher un jambon (3) selon la revendication 1, dans lequel lesdites ouvertures (15) sont obtenues dans lesdites plaques de raccordement (12a, 12b).

3. Dispositif d'accrochage (1) pour accrocher un jambon (3) selon la revendication 1 ou 2, dans lequel chaque plaque de raccordement (12a, 12b) présente une section plane sensiblement en forme d'arc.

4. Dispositif d'accrochage (1) pour accrocher un jambon (3) selon une quelconque revendication précédente, dans lequel ladite seconde mâchoire (7) comprend en outre une paire de plaques latérales (24a, 24b) pourvues de premières extrémités (25) respectives et de secondes extrémités (26) opposées, lesdites premières extrémités (25) étant montées sur des zones opposées de ladite seconde plaque (21) et lesdites secondes extrémités (26) étant montées de manière pivotante sur un élément de pivot (27).

5. Dispositif d'accrochage (1) pour accrocher un jambon (3) selon la revendication 4, dans lequel chaque plaque latérale (24a, 24b) présente une section plane sensiblement en forme de S ou de S inversé.

6. Dispositif d'accrochage (1) pour accrocher un jambon (3) selon la revendication 4 ou 5, dans lequel ledit élément pivotant (16) et ledit élément de pivot 27) sont des broches présentant des axes longitudinaux (L, M) respectifs qui sont sensiblement parallèles.

7. Dispositif d'accrochage (1) pour accrocher un jambon (3) selon l'une quelconque des revendications 4 à 6, dans lequel ladite première mâchoire (6) est raccordée à une barre de support (4) dudit châssis d'assaisonnement (2) de façon à pouvoir pivoter autour dudit élément pivotant (16) dans ladite direction d'oscillation (F2), et ladite seconde mâchoire (7) est raccordée à ladite barre de support (4) de façon à pouvoir pivoter autour dudit élément de pivot (27) dans une direction de pivotement (F4), ladite seconde direction de pivotement (F4) concordant avec ladite seconde direction d'oscillation (F2), un pivotement de ladite première mâchoire (6) autour dudit élément pivotant (16) tirant avec lui ladite seconde mâchoire (7).

8. Dispositif d'accrochage (1) pour accrocher un jambon (3) selon une quelconque revendication précédente, dans lequel ledit profil desdits éléments en saillie (10) et ledit profil desdits autres éléments en saillie (22) présentent chacun une forme plane sensiblement en forme de C.

9. Dispositif d'accrochage (1) pour accrocher un jambon (3) selon une quelconque revendication précédente, dans lequel chaque ouverture (15) présente une section sensiblement en forme d'arc.
